# EUROPEAN PATENT SPECIFICATION

(11) **EP 2 082 631 B1**
(45) Date of publication and mention of the grant of the patent: **29.04.2015**
(21) Application number: 07820764.4
(22) Date of filing: 01.10.2007
(51) Int. Cl.: A47J 45/06, C25D 5/14, C25D 5/56

(54) **A COATING METHOD AND THE COATING FORMED THEREBY**
BESCHICHTUNGSVERFAHREN UND DADURCH GEBILDETER ÜBERZUG
PROCÉDÉ DE REVÊTEMENT, ET REVÊTEMENT AINSI OBTENU

(30) Priority: 02.10.2006 TR 200605423
(43) Date of publication of application: 29.07.2009
(73) Proprietor: Arçelik Anonim Sirketi, 34950 Istanbul (TR)
(72) Inventor: AKAY, Muge, 34950 Istanbul (TR)
(86) International application number: PCT/EP2007/060379
(87) International publication number: WO 2008/040700

(56) References cited:
- EP-A- 0 386 458
- EP-A- 0 853 322
- WO-A-2005/087979
- US-A1- 2002 114 884
- US-A1- 2004 000 049
- TENDERO ET AL: "Atmospheric pressure plasmas: A review" SPECTROCHIMICA ACTA. PART B: ATOMIC SPECTROSCOPY, NEW YORK, NY, US, US, vol. 61, no. 1, January 2006 (2006-01), pages 2-30, XP005288077 ISSN: 0584-8547

## Description

The present invention relates to a method of coating polymer surfaced with metal and a coating achieved by this method, the component on which the said coating is applied and the household appliance wherein this component is used.

Particularly in household appliances, it is preferred to produce of polymer and afterwards coat with metal the components such as the handle, control knob, frame, panel, display etc., instead of directly manufacturing from metal. Thus a significant cost advantage is provided.

In state of the art, in the production of household appliances, the electroplating method known as galvanoplating is used for metal coating of polymer components. This is a long and arduous process wherein the component to be coated has to be immersed in approximately 20 -30 baths. Besides, the coating is thicker than desired. However, it has been used since the scratch resistance is high and it holds less dirt.

Another method used in coating is physical vapor deposition method (PVD), even though easier, cannot be used in particularly the household appliance industry since the coating has a low scratch resistance and holds onto dirt easily.

In state of the art, in order to overcome the disadvantages of these two coating methods, some combination coating methods are developed that use both of them consecutively. For example, in the Japanese Patent Application No JP5136548, a method is described wherein double layer metal is coated on polyimide film for the production of flexible printed wiring board. After the polyimide film is subjected to alkali treatment, low-temperature plasma containing inorganic gas is generated and the surface of the polyimide film is continuously subjected to plasma treatment. Then, a first metal layer is made cover by a vacuum deposition method. Then, a second metal layer is applied on this first metal layer by the electroplating method.

In the Japanese Patent Application No JP3274261, a metal layer is coated on a polymer film such as polyimide by vacuum depositing method. The first metal is heat-treated and thermally diffused into the polymer film. A layer of the second metal is then formed on the polymer film in a desired thickness by electroless plating or electroplating method.

Another application is described in the European Patent Application No EP1137331. The component for use in manufacturing electronic interconnection devices is subjected to plasma treatment in an oxygen containing environment before coating by chromium and copper is coated by the method of vacuum and electroplating methods.

In the United States of America Patent Application No US2004069649, the polyimide resin film surface is treated with plasma or short wavelength ultraviolet radiation in the surface treatment process. The surface of the polyimide resin is electroplated with nickel by electroless method and electroplated with copper.

In the method explained in the Japanese Patent Application No JP2005126789, a polymer containing PBT among them is subjected to UV radiation in a gaseous environment. It is mentioned in the text that this gas should not be O₂ but can be He, Ne, Ar and H. Afterwards the coating is realized by first electroplating, then by an electroless plating methods.

In the Great Britain Patent Application No GB1149033, the plastics surface is first coated with iron powder in a binder before coating the plastic with metal by electroless and electroplating methods. In this way, the adhesion of plastic with metal is increased.

In the United Sates of America patent application no. 2003201186, in the method explained, first an electroless metal coating on the polymer is formed and then a coating of zinc or zinc alloy is electroplated on the metallized surface.

The state of the art combination coating implementations are mainly for plating electronic boards. These boards are mostly situated inside a body wherein the user cannot see. Adhesion of the coating on the polymer without a strong force does not pose a problem as a result of not being subjected to frequent contact of the user. Again for the same reason the low surface quality does not affect the exterior appearance of the product wherein the board is contained.

However since the quality of the coating considerably affects the esthetic appearance of the household appliance, a high surface quality has to be attained. Besides, these components of the household appliances wear out rapidly since they are used scores of times every day. For this reason, the coating has to be attained very well to the main part. In polymer types except acrylonitrile butadiene styrene (ABS), adhesion of coating is either very low or not present at all. Therefore, high cost solutions are administered in implementing the coating suitable for satisfying the said quality expectation in polymers besides ABS. Thus the use of cheaper materials such as polybutilene teraphthalate (PBT), polystyrene (PS) can not widespread in household appliance industry.

The knobs used in cooking devices such as ovens and cookers can be given as an example for this problem. As is known, a part of these knobs is inserted into the body of the cooking device; the other part extends outside for the user to hold. Since the temperature inside the cooking appliance is high, the interior part has to be heat resistant and the exterior part has to be coated with metal to satisfy the esthetic anticipation of the user. In order to meet the condition relating to heat, the interior part is made of heat resistant PBT. However, PBT is a material that cannot be easily metallized, that is, complications arise in plating with metal. Therefore the exterior part of the knob is made of ABS and plated with metal. In short, the knob is made of joining two parts produced from different materials moulded separately under the present conditions since the two provisions regarding heat and esthetic cannot be fulfilled together. This results in the production being more difficult and the increase in costs.

The object of the present invention is to design a coating method that provides the metal layer to adhere better on polymer and a coating formed by this method.

Another object of the present invention is to design a household appliance comprising components produced entirely of the same polymer having a high quality coating.

The coating method and the coating designed to fulfill the objective of the present invention is explicated in the attached claims.

In the coating method of the present invention, the surface of the polymer to be coated with at least two layers of metal by PVD and galvanoplating methods respectively is activated by a simultaneous quadruple process formed of UV treatment, oxidation, ozonization and corona. The said quadruple surface activation and the following PVD and galvanoplating processes provide a better quality plating to be achieved than the prior art.

In an embodiment of the present invention, just after the quadruple surface activation, a second corona application is done in order to further increase the surface activation of the polymer.

Another process that is crucial for the adhesion of coating to the surface is pretreatment of the surface with glow discharge. In the experiments, it has been established that not making this process leads to losses in adhesion of the coating.

Additionally, it is shown that before the surface activation step, surface pretreatment with alkali and neutralization by immersing into acid steps is consequential in the adhesion after coating. Particularly hydrochloric and sulfuric acids give the best results.

Furthermore, after coating by PVD, the polymer component is immersed into a hot alkali cleaning bath before the galvanoplating step. This bath is observed to be effective in reducing the surface roughness, thus enhancing the surface quality and appearance of the coating.

In tests made with the method of the present invention, the results show that the coating made by the application of one layer of Cr and Ni on polymer by PVD, then one layer of Ni and Cr respectively by galvanoplating provides the best adhesion.

The said method and coating make possible the production of the components used in household appliances such as knobs, arms, handles, and display frames of entirely PBT or similar polymers. Besides, the esthetic appearance of the household appliance is enhanced since a high quality surface finish is achieved. Furthermore, the household appliance components coated with the plating of the present invention do not wear out in a short time although subject to frequent use. By means of the present invention, it has also been possible to apply the coating on cheaper materials such as (PBT) polybutilene teraphthalate, polystyrene besides ABS.

By means of the present invention, it is possible to produce both the interior and exterior parts of the knobs used in ovens and cookers with PTB which is a heat resistant and cheap polymer. The coating on this knob, from inside to outside comprising respectively of Cr-Ni-Ni-Cr layers has satisfied the condition of appearance quality required by household appliances. Consequently, the production cost of the said knobs is reduced.

The coating method and household appliance designed to fulfill the objective of the present invention is illustrated in the attached figures, where:
Figure 1 - is the flow chart of the coating method.
Figure 2 - is the flow chart of another embodiment of the coating method.
Figure 3 - is the schematic cross- sectional view of the polymer and the coating.
Figure 4 - is the perspective view of a household appliance.
Figure 5 - is the perspective view of another household appliance.

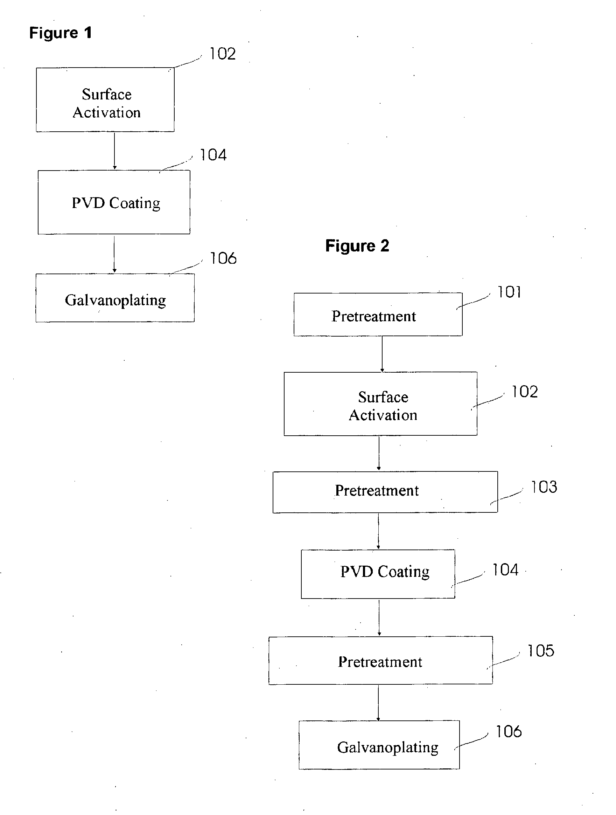

Basically, a three step method is applied for coating metal on polymer. With this method, first the surface of the polymer to be coated is activated (102). Then at least one layer of metal is coated by PVD method to provide the required conductivity on the polymer surface (104). On top of this PVD layer, a second metal layer is coated, this time by galvanoplating (106) (Figure 1).

The surface activation step (102) increases the reactivation of the polymer surface for a short time period (maximum 4 hours, for example). In the time duration wherein the surface is active, it is possible to coat metal on polymer.

By means of the method of the present invention, surface activation (102), UV treatment, oxidation, ozonization and corona treatment are applied simultaneously. During oxidation, oxygen provides the hydrocarbons contaminating the surface to be removed by forming CO₂ thus pre-treating the surface. UV radiation overcomes the surface binding strength of hydrocarbons, separating from the surface. Ozonization helps in increasing surface energy by the bond of valence electrons. The fast electrons and ions formed by corona discharge hit the surface to break off electrons from the surface. By means of this combined effect, hard to metallize polymers can be sufficiently activated.

In this method, the surface activation process is accomplished in a box wherein aluminum wires and UV lamps are furnished. A noble gas, e.g. argon is provided inside the box. The polymer to be coated is placed inside this box, UV lamps are turned on and 1500 Volt low, direct current is applied on the wires. Simultaneously oxygen gas, with a proportion of minimum 5 % to maximum 25 % of argon gas volume, is delivered inside. UV radiation converts only some portion of the oxygen gas to ozone, maintaining a plasma environment formed of oxygen-ozone mixture. The activated oxygen and the created ozone act on the surface of the polymer, breaking the polymer chain and provide the free ions to react with the radicals. The created polar groups provide higher energy surfaces to form. The carbonyle groups (C=O) formed on the surface by the ozonization process forms an acidic surface and provides a suitable milieu for the substantially alkaline coating to adhere better to the surface. Simultaneously, the current delivered to aluminum wires provides the formation of a corona. The UV radiation acts on the surface, breaking off electrons from the surface thus increasing the surface energy. In the experiments conducted, it is observed that the application of the said quadruple process for a certain time period, depending on the type of polymer, gives the best results, if the process is continued after this time, adhesion bond is reduced. This time period is determined as 10 minutes for PP, 15 for PS and 25 for PBT and ABS.

Furthermore, a temperature of about 60-70°C is maintained in the box with the heat emanating from the UV light source, thus releasing the moisture and other gases absorbed by polymer and an additional oven-drying procedure is not required. Accordingly, adhesion problems due to moisture during coating are prevented. Besides, since the gas absorbed by polymer is removed before the coating steps (104, 106), this gas is prevented from diffusing into the vacuum surroundings and breaking the vacuum during coating. Breaking of the vacuum is a factor that adversely affects adhesion of the coating.

In this step (102) the polymer dehumidified and with sufficiently activated surface is ready for coating thereon. The PVD coating step (104) is achieved by delivering preferably Ar gas into the vacuum chamber. The coating is realized in 10⁻² -10⁻¹² Torr vacuum, using 200-600 A current and 2-12 V voltage. The galvanoplating step (106) is done by immersing the polymer into a bath with a certain temperature, voltage and current value. For example, for nickel plating, polymer is immersed into a bath of glossy nickel at ∼50°C temperature, with applied voltage of 5 V and current of 50-100 A. When a second galvanoplating layer is desired to be constituted on this first galvanoplating layer, the polymer leaving the nickel bath is washed and submerged into a chromium bath wherein voltage of 5 V and current of 50 A is applied and plated with chromium.

In another embodiment of the present invention, in the surface activation step (102), following the quadruple activation, a second corona discharge is applied on polymer. This application provides to further increase the surface energy of polymer thus maintaining a better adhesion of the plating.

In an embodiment of the present invention, the coating method, in addition to the above steps, includes an alkali treatment step (101) prior to the surface activation step (102). This step comprises first washing with alkali then neutralization by immersing into a concentrated acid bath. During experiments, various concentrated acids have been used; however the best results were achieved by hydrochloric and sulfuric acids during measurements taken for adhesion after plating. Therefore, it is particularly preferable to use hydrochloric acid of 99 % volumetric purity. The isopropyl alcohol and dichloromethane that are known to be effective in removing oil based grime has not given the desired results for all the polymer types. Dichloromethane reacts with ABS and impairs the surface. Isopropyl alcohol is effective on the silicon type chemical used in the plate however after vaporizing leaves behind a residual layer that necessitates a second pretreatment process. Nonetheless, since positive results are attained in adhesion tests, isopropyl alcohol can also be used.

In another embodiment of the present invention, in addition to the above steps, during the activation (102) and PVD plating (104) steps, the surface treatment step (103) by negative ion discharge is also employed. In this step, the polymer to be plated is placed in a vacuum box, for example into the device wherein the PVD coating will be done. During experiments, first the vacuum is reduced to the value of 10⁻⁶Torr in the box, then a gas is delivered into the system bringing the vacuum to the value of 10⁻² Torr and lastly the negative ion discharge means is operated at approximately 5000 Volt voltage, providing to be bombarded by the negative electrons and ions for a certain time, for example 10 minutes. It has been observed that this process is important for the plating to adhere on the polymer. The coatings realized by using this process have yielded better adhesion.

In the step of pretreatment with negative ion discharge (103), the gas delivered into the box can be air or oxygen (O₂ ). However, if air is used, the content of nitrogen gas contained therein can attribute minimal alkali characteristics to the surface, thus rendering the previous ozonization-oxidation procedure ineffective and neutralizing the surfaces. Therefore, in the method of the present invention, it is preferred to deliver oxygen gas (O₂) into the box so that the acidic property of the surface is not corrupted.

In yet another embodiment of the present invention, in addition to the above steps, a second pretreatment step (105) is administered between the PVD plating step (104) and the galvanoplating (106) step. The polymer coated by PVD is immersed into a cleaning bath of hot alkali (105) for removing the grime that may be present on the coating. The cleaning bath preferably contains NaOH and is applied under 12 V voltages and 50 A current. After this, polymer is washed with acidic water to be pacified. It has also been observed that this procedure is critical in reducing surface roughness (Figure 2).

The coating obtained by one of the methods explicated above is preferably applied on polymers selected from a group including PS, PBT and ABS. This coating comprises a polymer substrate (B), at least one layer (VI, V2 ...) coated on this substrate (B) by the PVD method, and at least one layer (G1, G2...) on top of that by galvanoplating.

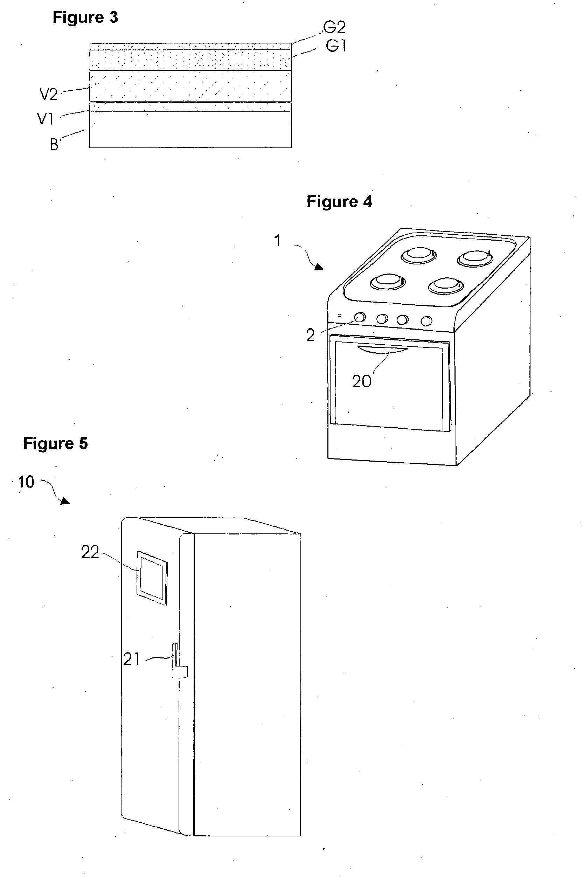

In the preferred embodiment, the coating comprises a polymer substrate (B), and on this substrate (B) from inside outward, respectively, a layer of chromium (V1) coated by PVD method, a nickel layer (V2) coated by PVD method, a nickel layer (G1) coated by galvanoplating, and a layer of chromium (G2) coated by galvanoplating at the very exterior side (Figure 3). The thicknesses of these layers are as follows:
PVD Cr layer (V1): 900 Å
PVD Ni layer (V2): 2500 Å
Galvanoplated Ni layer (G1): 10-15 mm
Galvanoplated Cr layer (G2): 0, 20-0, 30 mm

### Samples

The method of the present invention has been applied on various samples and these samples have been tested to measure their endurance. To this end, adhesion, peeling, humidity, salt-fog, resistance to detergents, scratch resistance etc. tests have been utilized. During the adhesion strength test (according to DIN53151B/ASTM335 8-87 standards) the surface is scratched by an adhesion comb and then the coating is tried to be taken off by a special band. The peeling test, according to ASTM B-177 and ASTM B-487 standards, is carried out in the Taber abrasion device by scraping the coating with 240 and 340 sandpaper for a certain time period. The scratch resistance test is carried out by the Erichsen Scratch test device according to DIN 53799/ISO 4586 standards by applying different amounts of force on the plated polymer plates. As a result of the test, no scratch should be visible on the plate surface. The humidity test according to ASTM D 2267-87 standard is applied by keeping the coated sample in an environment with 100 % humidity for one week and then subjecting to testing for adhesion strength. The salt-fog test (according to ASTM D 714-56 /ASTM B 117-64 standards) is applied by keeping the samples in a cabin containing salt water fog for 5 days. The detergent resistance test is applied by wiping the plates 250 dropts with a cotton cloth daubed in various detergents. As the control sample, an ABS plate is galvanoplated by Cr, using the methods in the prior art. The samples and the test results are given below:

### Sample I:

In this sample, the polymer has been subjected to only UV beams and coated with silver by PVD. On top of the silver layer, copper, nickel and chromium have been coated respectively, this time by galvanoplating. This method is applied on PBT, PP; PP-MB alloy, PS and ABS. The test results are given in Table A:
[Table 0001]
[Table]

**Table 1**

| Table A: Simple I test results: | | | | | | | |
|---|---|---|---|---|---|---|---|
| Polymer | Test | | | | | | |
| | Adhesion | Peeling- | | Humidity (% 100, 60 st) | Salt-flog | Resistance to detergent | Scratch resistance (N) |
| | | 240 (40 sn) | 320 (90 sn) | | | | |
| PBT | X | N | N | X | - | - | - |
| ABS | + | N | N | X | - | - | - |
| PP | X | N | N | X | - | - | - |
| PP-MB | X | N | N | X | - | - | - |
| PS | X | N | N | X | - | - | - |
| Control sample | - | Y | M | - | - | - | - |
| M: Marked scratch, Y: Scratching, N: No scratch, X: Plating peeled, +: Plating not peeled | | | | | | | |

The tests conducted show that this sample, although giving good results in e.g. the peeling test, has not satisfied the expectations in adhesion and humidity tests. The comparison with the other samples proves that not delivering oxygen to the cabin and not applying corona discharge while applying UV radiation effects adhesion very adversely. Furthermore, it is assumed that the copper used in plating may have an adverse effect on adhesion.

### Sample II:

In this sample, the subject of the present invention the quadruple surface activation (102) has been applied. Then, Cr and Ni are coated on the polymer by PVD, and on top of that Ni and Cr are coated by galvanoplating. The thickness of the chromium layer constituted by PVD is approximately 2500 Å, the thickness of the nickel layer is approximately 900 Å. This method has been applied on PBT, PP; PP-MB alloy, PS and ABS. The test results are given in Table B:
[Table 0002]
[Table]

**Table 2**

| Table B: Sample II test results: | | | | | | | |
|---|---|---|---|---|---|---|---|
| Polymer | Test | | | | | | |
| | Adhesion | Peeling | | Humidity (%100, 200 st) | Salt-water fog | Resilience to detergents | Scratch resistance (N) |
| | | 240 (40 sn) | 320 (40 sn) | | | | |
| PBT | + | N | N | + | - | + | - |
| ABS | + | N | N | + | - | + | - |
| PP | X | Y | CV | X | - | - | - |
| PP-MB | X | N | N | X | - | - | - |
| PS | + | N | N | + | - | - | - |
| Control sample | - | - | - | - | - | - | - |
| M: Marked scratch, Y: Scratching, N: No scratch, X: Plating peeled, +: Plating not peeled | | | | | | | |

The tests carried out have yielded positive results for this sample, except for PP and PP-MB.

### Sample III:

In this sample the method that is the subject matter of present invention, the quadruple surface activation has been applied. Then, Cr and Ni are coated on the polymer by PVD, and on top of that Cu, Ni and Cr are coated by galvanoplating. The thickness of each layer of chromium and nickel constituted by PVD is approximately 2000 Å. This method has been applied on PBT, PP-MB alloy, PS and ABS. The test results are given in Table C:
[Table 0003]
[Table]

**Table 3**

| Table C: sample III test results: | | | | | | | |
|---|---|---|---|---|---|---|---|
| Polymer | Test | | | | | | |
| | Adhesion | Peeling- | | Humidity (%100, 150 st) | Salt-fog | Resistance to detergent | Scratch resistance (N) |
| | | 240 (40 sn) | 320 (40 sn) | | | | |
| PBT | X | - | - | - | - | - | - |
| ABS | X | - | - | + | - | X | - |
| PP | - | - | - | - | - | - | - |
| PP-MB | X | - | - | - | - | - | - |
| PS | + | - | - | - | - | + | - |
| Control Sample | - | - | - | Oxidation observed | - | - | - |
| M: Marked scratch, Y: Scratching, N: No scratch, X: Plating peeled, +: Plating not peeled | | | | | | | |

In this sample, copper is used in galvanoplating. When the test results of sample I wherein copper is used and Sample II, not using copper, are evaluated together, copper is shown to have a considerably negative effect on adhesion. Particularly, in the ABS and PBT plates, the galvanoplated coating has peeled starting from the red copper layer. On the other hand, it has been observed that the galvanoplated Cr and Ni coatings have increased the durability considerably in humidity and detergent tests. Furthermore, the oxidation observed in ABS samples that are coated with copper by galvanoplating method has not been observed in these samples.

### Sample IV:

In this sample, the subject of the present invention, the quadruple surface activation step (102) has been applied. Then, Cr and Ni are coated on the polymer by PVD, and on top of that Ni and Cr are coated by galvanoplating. The thickness of the chromium layer constituted by PVD is approximately 900 Å and the thickness of the nickel layer is 2500 Å. This method has been applied on PBT, PP-MB alloy, PS and ABS. The test results are given in Table D:
[Table 0004]
[Table]

**Table 4**

| Table D: Sample IV test results: | | | | | | | |
|---|---|---|---|---|---|---|---|
| Polymer | Test | | | | | | |
| | Adhesion | Peeling -(30 sn) | | Humidity (% 100, 3 weeks) | Salt-fog | Resistance to detergent | Scratch Resistance (N) |
| | | 240 | 320 | | | | |
| PBT | + | N | N | + | + | + | 0,1 |
| ABS | + | N | N | + | X | + | 0,1 |
| PP | + | Y | Y | X | X | + | 0,1 |
| PP-MB | X (%40) | Y | N | X | X | X | 0,1 |
| PS | + | N | N | + | + | + | 0,2 |
| Control sample | X (%10) | N | N | X | X | X | 0,1 |
| M: Marked scratch, Y: Scratching, N: No scratch, S: Slightly scratched, X: Coating peeled, +: Coating not peeled | | | | | | | |

In this sample, the best results are obtained by the method of the present invention. On one hand, the adhesion, scratching and peeling performance is achieved by galvanoplating, and on the other hand more inexpensive materials like PBT, PS can be coated. The results, if evaluated together with the Sample II, show that the coating of Cr-Ni-Ni-Cr gives the best results particularly with PBT. Besides, it is observed that the thickness of the nickel layer by PVD and the adhesion of the coating have a directly proportional correlation.

The coating of the present invention is applied in components used in household appliances such as the knob (2), display frame (22), arm (21) or the handle (20) (Figure 4 and Figure 5). By this means, high surface quality coatings compatible with household appliance requirements can be implemented on polymers of feasible costs. The said household appliance can be a refrigerator (10) (Figure 5), a washing machine, a dishwasher or a cooking device (1) (Figure 4).

Particularly in cooking devices (1) it is possible to produce the knob (2) entirely of PBT, preferably as a single piece and to coat with metal. A coating comprising the layers of from inside outward respectively Cr-Ni-Ni-Cr is applied on the component made of PBT in a single mould by the method of the present invention. The two innermost layers are applied by the PVD method and the outermost two are applied by galvanoplating. Consequently, while the interior part of the knob is heat resistant to the temperature inside the cooking device, the exterior part is plated with a durable coating having a smooth appearance.

In the coating method of the present invention, the surface activation process implemented prior to PVD and galvanoplating steps, makes possible the actualization of a coating having a higher surface quality.

## Claims

1. A coating method, used in coating metal on polymer **characterized by** the steps of: -activating the surface of the polymer to be coated by simultaneous application of ozonization, oxidation, UV and corona effect (102), -coating the polymer surface with at least one layer of metal by PVD method to provide the required conductivity (104), -coating of at least one layer of metal by galvanoplating method (106) after the PVD plating step (104).

2. A coating method as in Claim 1, **characterized by** the surface activation step (102) which is applied for 10 minutes if the polymer to be coated is PP, 15 minutes if PS, and 25 minutes if PBT and ABS.

3. A coating method as in any one of the above claims, **characterized by** the surface activation step (102) which is implemented in a box furnished with aluminum wires and UV lamps, wherein a noble gas is contained and oxygen (02) is deliverable from the outside.

4. A coating method as in Claim 3, **characterized by** the surface activation step (102) which is effectuated in a closed box wherein a temperature of 60-70° C is formed by the heat generated from the UV lamps.

5. A coating method as in Claim 3, or 4, **characterized by** the surface activation step (102) wherein the proportion of oxygen delivered into the box is 5 % to 25 % of the volume of the noble gas and the application of ozonization and oxidation together by only some portion of the oxygen being converted into ozone.

6. A coating method as in Claim 3, 4 or 5, **characterized by** the surface activation step (102) wherein the corona effect is achieved by applying a low direct cunent of 1500 Volt to the aluminum wires.

7. A coating method as in any one of the above claims, **characterized by** the surface activation step (102) comprising the application of a second corona application on the polymer material.

8. A coating method as in any one of the above claims, **characterized by** the alkali prctreatment step (101) applied prior to the surface activation step (102).

9. A coating method as in Claim 8, **characterized by** the alkali pretreatment step (101) comprising the steps of washing with alkali followed by neutralization by immersing into concentrated acid.

10. A coating method as in Claim 9, **characterized by** the alkali pretreatment step (101) wherein hydrochloric acid of 99 % volumetric purity is used.

11. A coating method as in any one of the above claims, **characterized by** the surface pretreatment with negative ion discharge step (103) applied between the surface activation step (102) and the PVD coating step (104).

12. A coating method as in any one of the above claims, **characterized by** the pre-treatment step (105) comprising immersion into hot alkali cleaning bath process between the steps of PVD coating (104) and galvanoplating (106).

13. A coating obtained by a method as in any one of the above claims.

14. A coating as in Claim 13, **characterized by** a coating on a polymer substrate (B) from inside outward, a layer of Cr (V1) deposited by PVD method and on top of that a layer of Ni (V2) by PVD method and on top of that a layer of Ni (G1) by galvanoplating, and at the outermost a Cr layer (G2) constituted by galvanoplating.

15. A coating as in Claim 14, **characterized by** the PVD Cr layer (V1) having a thickness of 900 Å, the PVD Ni layer (V2) having a thickness of 2500 Å, the galvanoplated Ni layer (G1) having a thickness of 10-15 mm and the galvanoplated Cr layer (G2) having a thickness of 0,2-0,3 mm.

16. A household appliance (1) **characterized by** a component (2) produced of polymer on which a coating as in Claim 13, 14 or 15 is applied.

17. A household appliance (1) as in Claim 16, which is a cooking device.

18. A household appliance (1) as in Claim 17, **characterized by** a component (2) produced entirely of PBT and used as a knob.

19. A household appliance (1) as in Claim 16, **characterized by** a component (2) produced of polymer and used as a handle.

20. A household appliance (1) as in Claim 16, **characterized by** a component (2) produced of polymer and used as a display frame.

## Patentansprüche

1. Beschichtungsverfahren zum Beschichten von Polymer mit Metall, **gekennzeichnet durch** folgende Schritte:
- Aktivieren der Oberfläche des zu beschichtenden Polymers **durch** gleichzeitiges Anwenden von Ozonisierung, Oxidation, UV und Koronawirkung (102)
- Beschichten der Polymeroberfläche mit wenigstens einer Schicht aus Metall mittels PVD-Verfahren, um die erforderliche Leitfähigkeit bereitzustellen (104),
- Beschichten mit wenigstens einer Schicht aus Metall **durch** ein Galvalisierungsverfahren (106) nach dem PVD-Abscheidungsschritt (104).

2. Beschichtungsverfahren nach Anspruch 1, **dadurch gekennzeichnet, dass** der Oberflächenaktivierungsschritt (102) 10 Minuten lang angewandt wird, wenn das zu beschichtende Polymer PP, 15 Minuten, wenn es PS ist, und 25 Minuten, wenn es PBT und ABS ist.

3. Beschichtungsverfahren nach einem der vorangehenden Ansprüche, **dadurch gekennzeichnet, dass** der Oberflächenaktivierungsschritt (102) in einem Kasten implementiert wird, der mit Aluminiumdrähten und UV-Lampen ausgestattet ist, und in dem ein Edelgas enthalten ist und dem Sauerstoff (02) von außen zugeführt werden kann.

4. Beschichtungsverfahren nach Anspruch 3, **dadurch gekennzeichnet, dass** der Oberflächenaktivierungsschritt (102) in einem geschlossenen Kasten bewirkt wird, in dem durch die von den UV-Lampen erzeugte Wärme eine Temperatur von 60-70° C erzeugt wird.

5. Beschichtungsverfahren nach Anspruch 3 oder 4, **dadurch gekennzeichnet, dass** bei dem Oberflächenaktivierungsschritt (102) der Anteil von Sauerstoff, der dem Kasten zugeführt wird, 5 % bis 25 % des Volumens des Edelgases beträgt, wobei die Ozonisierung und die Oxidation gemeinsam angewandt werden, indem nur ein Teil des Sauerstoffs in Ozon umgewandelt wird.

6. Beschichtungsverfahren nach Anspruch 3, 4 oder 5, **dadurch gekennzeichnet, dass** bei dem Oberflächenaktivierungsschritt (102) die Koronawirkung durch Anlegen eines niedrigen Gleichstroms von 1500 Volt an die Aluminiumdrähte erzielt wird.

7. Beschichtungsverfahren nach einem der vorangehenden Ansprüche, **dadurch gekennzeichnet, dass** der Oberflächenaktivierungsschritt (102) die Anwendung einer zweiten Koronaanwendung auf dem Polymermaterial umfasst.

8. Beschichtungsverfahren nach einem der vorangehenden Ansprüche, **dadurch gekennzeichnet, dass** der Alkalivorbehandlungsschritt (101) vor dem Oberflächenaktivierungsschritt (102) angewandt wird.

9. Beschichtungsverfahren nach Anspruch 8, **dadurch gekennzeichnet, dass** der Alkalivorbehandlungsschritt (101) die Schritte des Waschens mit Alkali, gefolgt von einer Neutralisierung durch Eintauchen in konzentrierte Säure umfasst.

10. Beschichtungsverfahren nach Anspruch 9, **dadurch gekennzeichnet, dass** in dem Alkalivorbehandlungsschritt (101) Salzsäure mit einer volumetrischen Reinheit von 99 % verwendet wird.

11. Beschichtungsverfahren nach einem der vorangehenden Ansprüche, **dadurch gekennzeichnet, dass** der Schritt der Oberflächenvorbehandlung mit Negativionenentladung (103) zwischen dem Oberflächenaktivierungsschritt (102) und dem PVD-Beschichtungsschritt (104) angewandt wird.

12. Beschichtungsverfahren nach einem der vorangehenden Ansprüche, **dadurch gekennzeichnet, dass** der Vorbehandlungsschritt (105) einen Prozess des Eintauchens in ein heißes Alkalireinigungsbad zwischen den Schritten der PVD-Beschichtung (104) und des Galvanisierens (106) umfasst.

13. Beschichtung, die durch ein Verfahren nach einem der vorangehenden Ansprüche erzielt wird.

14. Beschichtung nach Anspruch 13, **gekennzeichnet durch** eine Beschichtung auf einem Polymersubstrat (B) aus, von innen nach außen, einer Schicht Cr (V1), die mittels PVD-Verfahren abgeschieden wird, darüber einer Schicht Ni (V2) mittels PVD-Verfahren und darüber einer Schicht Ni (G1) **durch** Galvanisieren, und einer äußersten Schicht aus Cr (G2) durch Galvanisieren.

15. Beschichtung nach Anspruch 14, **dadurch gekennzeichnet, dass** die PVD-Cr-Schicht (V1) eine Dicke von 900 Ä aufweist, die PVD-Ni-Schicht (V2) eine Dicke von 2500 Ä aufweist, die galvanisierte Ni-Schicht (G1) eine Dicke von 10-15 µm aufweist und die galvanisiserte Cr-Schicht (G2) eine Dicke von 0,2-0,3 µm aufweist.

16. Haushaltsgerät (1), **dadurch gekennzeichnet, dass** ein Bauteil (2) aus Polymer hergestellt ist, auf dem eine Beschichtung nach den Ansprüchen 13, 14 oder 15 angewandt wurde.

17. Haushaltsgerät (1) nach Anspruch 16, das ein Kochgerät ist.

18. Haushaltsgerät (1) nach Anspruch 17, **dadurch gekennzeichnet, dass** ein Bauteil (2) vollständig aus PBT hergestellt ist und als Knopf verwendet wird.

19. Haushaltsgerät (1) nach Anspruch 16, **dadurch gekennzeichnet, dass** ein Bauteil (2) vollständig aus Polymer hergestellt ist und als Griff verwendet wird.

20. Haushaltsgerät (1) nach Anspruch 16, **dadurch gekennzeichnet, dass** ein Bauteil (2) vollständig aus Polymer hergestellt ist und als Anzeigerahmen verwendet wird.

## Revendications

1. Un procédé de revêtement utilisé pour revêtir un métal sur un polymère, **caractérisé par** les étapes de
- activer la surface du polymère à revêtir par l'application simultanée d'ozonisation, oxydation, UV et l'effet corona (102),
- revêtir la surface du polymère avec au moins une couche de métal par le procédé PVD pour fournir la conductivité requise (104),
- revêtir au moins une couche de métal par le procédé électroplacage (106) après l'étape de revêtement PVD (104).

2. Un procédé de revêtement selon la Revendication 1, **caractérisé par** l'étape d'activation de surface (102) qui est appliquée pendant 10 minutes si le polymère à revêtir est PP, 15 minutes s'il est PS et 25 minutes s'il est PBT et ABS.

3. Un procédé de revêtement selon l'une quelconque des revendications précédentes, **caractérisé par** l'étape d'activation de surface (102) qui est appliquée dans une boîte garnie de fils d'aluminium et des lampes UV, où un gaz noble est contenu et à laquelle l'oxygène (02) est livré de l'extérieur.

4. Un procédé de revêtement selon la Revendication 3, **caractérisé par** l'étape d'activation de surface (102) qui est appliquée dans une boîte fermée où une température de 60-70° C est formée par la chaleur générée par les lampes UV.

5. Un procédé de revêtement selon la Revendication 3 ou 4, **caractérisé par** l'étape d'activation de surface (102) où la proportion de l'oxygène délivré dans la boîte est 5% à 25% du volume du gaz noble et l'application de l'ozonisation et oxydation ensemble par la conversion de seulement une partie de l'oxygène en ozone.

6. Un procédé de revêtement selon la Revendication 3, 4 ou 5, **caractérisé par** l'étape d'activation de surface (102) où l'effet corona est réalisé en appliquant un faible courant continu de 1500 volts aux fils d'aluminium.

7. Un procédé revêtement selon l'une quelconque des revendications précédentes, **caractérisé par** l'étape d'activation de surface (102) comprenant l'application d'une seconde application de corona sur le polymère.

8. Un procédé revêtement selon l'une quelconque des revendications précédentes, **caractérisé par** l'étape de prétraitement alcalin (101) appliquée avant l'étape d'activation de surface (102).

9. Un procédé de revêtement selon la Revendication 8, **caractérisé par** l'étape de prétraitement alcalin (101) comprenant les étapes de lavage avec un alcali suivie de la neutralisation par l'immersion dans l'acide concentré.

10. Un procédé de revêtement selon la Revendication 9, **caractérisé par** l'étape de prétraitement alcalin (101) où un acide chlorhydrique de pureté volumétrique 99% est utilisé.

11. Un procédé revêtement selon l'une quelconque des revendications précédentes, **caractérisé par** l'étape de prétraitement de surface au décharge d'ions négatifs (103) appliquée entre l'étape d'activation de surface (102) et l'étape de revêtement par PVD (104).

12. Un procédé revêtement selon l'une quelconque des revendications précédentes, **caractérisé par** l'étape de prétraitement (105) comprenant le processus de l'immersion dans un bain chaud de nettoyage d'alcali appliquée entre les étapes de revêtement par PVD (104) et d'électroplacage (106).

13. Un revêtement réalisé par un procédé selon l'une quelconque des revendications précédentes.

14. Un revêtement selon la Revendication 13, **caractérisé par** un revêtement sur un substrat de polymère (B) de l'intérieur vers l'extérieur, une couche de Cr (V1) déposée par le procédé PVD et sur celle-ci une couche de Ni (V2) par le procédé PVD et sur celle-ci une couche de Ni (G1) par l'électroplacage et au plus à l'extérieur une couche de Cr (G2) constituée par l'électroplacage.

15. Un revêtement selon la Revendication 14, **caractérisé par** la couche de Cr par PVD (V1) ayant une épaisseur de 900 Å, la couche de Ni par PVD (V1) ayant une épaisseur de 2500 Å, la couche de Ni électroplaquée (G1) ayant une épaisseur de 10-15 µm et la couche de Cr électroplaquée (G2) ayant une épaisseur de 0.2-0.3 µm.

16. Un électroménager (1) **caractérisé par** un composant (2) produit en polymère sur lequel un revêtement selon la Revendication 13, 14 ou 15 est appliqué.

17. Un électroménager (1) selon la Revendication 16, qui est un dispositif de cuisson.

18. Un électroménager (1) selon la Revendication 17, **caractérisé par** un composant (2) produit entièrement en PBT et utilisé comme un bouton rotatif.

19. Un électroménager (1) selon la Revendication 16, **caractérisé par** un composant (2) produit entièrement en polymère et utilisé comme une poignée.

20. Un électroménager (1) selon la Revendication 16, **caractérisé par** un composant (2) produit entièrement en polymère et utilisé comme un cadre d'affichage.
